# EUROPEAN PATENT APPLICATION

(11) **EP 4 660 727 A1**
(43) Date of publication of application: **10.12.2025**
(21) Application number: 25180330.0
(22) Date of filing: 03.06.2025
(51) Int. Cl.: G05B 19/4155, G05B 19/4097

(54) **METHOD AT A WORK CENTRE FOR CUTTING A PANEL INTO A PLURALITY OF PIECES AND ASSOCIATED WORK CENTRE**

(30) Priority: 03.06.2024 IT 202400012619
(71) Applicant: SCM Group S.p.A., 47921 Rimini (RN) (IT)
(72) Inventor: MARTELLI, Giuseppe, 47921 Rimini (IT); CECCHI, Marco, 47921 Rimini (IT); ROSSINI, Simone, 47921 Rimini (IT); MUCCIOLI, Gianluca, 47921 Rimini (IT); IACCHELLI, Fausto, 47921 Rimini (IT)
(74) Representative: Tiburzi, Andrea

(57) **Abstract**

The present invention relates to a computer-implemented method at work centre (1) for cutting a panel (P) into a plurality of pieces (Ri), said panel (P) being referenced on a work table (12) of the work centre (1) relative to a first axis (XR) of said work table (12) and a second axis (YR) of said work table (12); said work table (12) being divided into a plurality of sectors (S1-S4), each of said plurality of sectors extending along a respective development axis (A1-A4) parallel to the remaining development axes of said remaining sectors and parallel to a reference axis of said first axis (XR) and said second axis (YR); said method comprising the following steps: B) performing a cutting sequence for each piece of said plurality of pieces (Ri), each being arranged at least partially on one or more sectors (S1-1, S1-2) of said plurality of sectors (S1-S4), said one or more sectors (S1-1, S1-2) being arranged along the same development axis (A1) and in a vacuum condition to hold in position at least a respective portion of said panel (P) arranged on said one or more sectors (S1-1, S1-2); C) in response to an indication that said step B has been completed, placing said one or more sectors (S1-1, S1-2) in a non-vacuum condition; and D) performing steps B and C for one or more additional sectors (S2-1, S2-2) of said plurality of sectors being arranged along an additional development axis (A2) parallel to said development axis (A1).

## Description

The present invention relates to a method at a work centre for cutting a panel into a plurality of pieces and to an associated work centre.

### Field of the invention

More specifically, the invention concerns a method for cutting panels, such as wood, fiberglass, plastic panels and the like, which allows placing sectors of the work table in a non-vacuum condition, thereby concentrating vacuum in the remaining sectors as the machining of the panel progresses, obtaining in improved holding of the panel on the work table and allowing to maintain in position even small parts to cut during the actual cutting phases.

In the following description, reference will be made to the nesting-type cutting of wooden panels, however it is evident that the invention is not limited to this specific application.

### Background

Currently, in the field of machine tools, work centres exist that are designed to cut panels, making it possible to obtain pieces of various sizes and shapes. These pieces are mainly used for furniture assembly, and interior or exterior fittings.

Such work centres are also known as "nesting" type work centres, referring to their ability to cut specifically shaped pieces, maximizing the use of the panel and minimizing waste.

Work centres of the "nesting" type generally comprise a base frame, a work table for at least one panel, a bridge mobile along the work table, and a multifunctional machining unit equipped with at least one machining tool for machining the panel.

When the panel to be processed is placed on top of the work table, it is held in position by vacuum means during machining.

The work table may comprise for example a spoil board, in such a case suction through the spoil board creates a vacuum condition beneath the panel that holds it in place on top of the work table.

The effective cutting, once the panel is positioned on the work table, is performed based on a cutting sequence determined by software, such as cutting sequences generated by optimization software. The actual cutting is carried out using one or more machining tools, such as a router, suitable for drilling and/or cutting the required pieces.

The vacuum means may include so-called *"static vacuum management distributors",* which allow vacuum to be activated in one or more sectors of the work table before the cutting is effectively executed, but unlike *"dynamic vacuum management distributors",* they do not allow vacuum to be dynamically activated in the sectors of the work table during the execution of the cutting sequence.

**In** "nesting" type machining operations, as mentioned, the retention of the panel to be cut and the pieces obtained after machining positioned on the spoil board is obtained by a vacuum created by the vacuum means through the spoil board itself.
The vacuum created by the vacuum means generates a force exerted on the pieces along a direction perpendicular to the support plane, due to the pressure difference between the upper and lower faces of the panel. This force ensures the retention of the panel and the cut pieces on the spoil board by friction of the panel and of the pieces on the spoil board as the tool follows the trajectory defined by the cutting sequence.

Indeed, when the tool moves horizontally in the panel to be machined to cut the pieces, it exerts a primarily tangential force within a plane parallel to the panel itself, that is when the tool advances through the material.

This phenomenon occurs more typically in cases where the pieces have a non-negligible thickness and are machined using rotary tools, such as routers and the like; this is due to the geometry of the tools and the presence of material thickness that resists tool advancement.

In a different case, when the same operations are performed on thinner pieces or materials using non-rotary tools with a single straight cutting edge, such as knives or cutters, the main component of the force transferred between the tool and the workpiece is exerted vertically, that is when the tool penetrates the material.

Since in the first case the tangential force on the pieces' support plane is greater, a vacuum must be generated to produce a correspondingly high frictional holding force.

For this reason, the vacuum means must be designed to produce the maximum possible vacuum level both on the panel before it is machined and on the finished pieces, if these are located in regions of the table affected by tool passage.

The vacuum means are therefore preferably operated so as to maintain pressure values (vacuum levels) within an appropriate range to ensure piece retention, regardless of flow rate.

In systems composed of vacuum means (pumps) and the vacuum system (ducts, vacuum distributor, vacuum zones of the table), the generation of appropriate vacuum pressure levels is preferred over obtaining higher flow rates.

In general, for a given vacuum pump operating condition, it is possible to vary the relationship between pressure and flow rate in a pump-system combination by acting solely on the system.

The type of static vacuum management distributors thus introduces limitations in the holding of pieces during execution of the cutting sequence, compromising the proper cutting of the pieces and consequently the effective utilization of the panel.

### Aim of the invention

In light of the above, an object of the present invention is to provide a method for cutting a panel into a plurality of pieces that enables optimized cutting even when using static vacuum management.

Accordingly, it is an object of the present invention a method for cutting a panel as claimed in claim 1, a work centre as claimed in claim 10, a computer program product as claimed in claim 12 and a computer-readable storage medium as claimed in claim 13.

Further preferred embodiments are described in the dependent claims.

### Brief description of the drawings

The present invention will now be described, by way of illustration and without limitation, according to its preferred embodiments, with particular reference to the accompanying drawings, in which:
Figure 1 shows a perspective view of a work centre comprising a work table for performing a nesting-type machining operation on a panel;
Figure 2 shows a perspective view of a static vacuum management distributor coupled to a corresponding pump;
Figure 3 shows a top view of the work table divided into four sectors;
Figure 4 shows a top view of the work table divided into eight sectors;
Figure 5 shows a block diagram for determining the optimized cutting of the panel;
Figure 6A shows a top view of a panel with visible cutting path for pieces and an exemplary cutting sequence obtained using the method described in Figure 5;
Figure 6B shows a top view of the panel shown in Figure 6A upon completion of the cutting sequence for sectors S1-1 and S1-2;
Figure 7 shows a top view of a portion of the panel with visible cutting paths for the pieces arranged in a higher vacuum retention area.

### Detailed description

In the various figures, like parts are indicated with the same reference numerals.

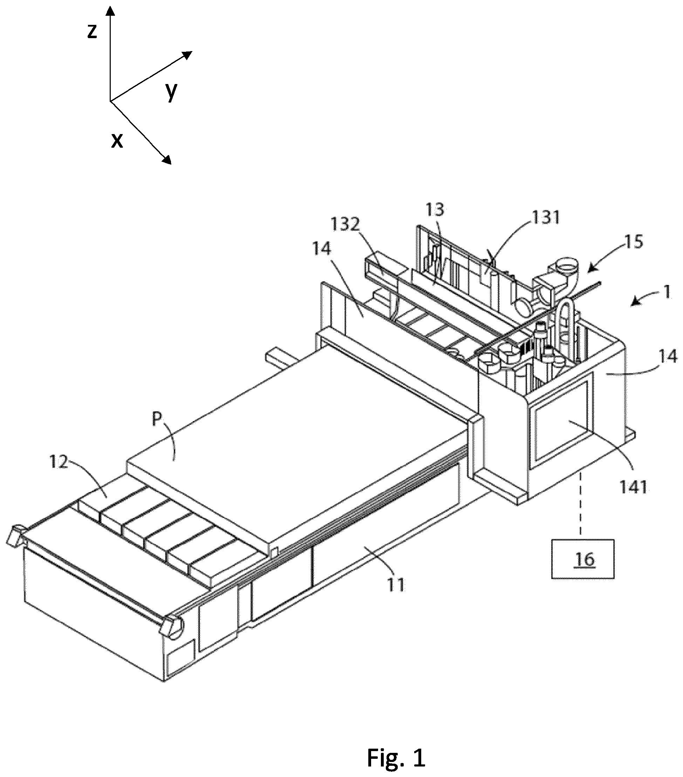

With reference to Figure 1, a perspective view is shown of a work centre 1 configured to perform nesting-type machining operations on a panel P.

The work centre 1 comprises a work table 12 for supporting the panel P, which is to be cut into a plurality of pieces Ri according to a cutting sequence, such as a proximity-based cutting sequence as described in Italian patent application no. 102022000014818.

The work table 12 may be made of aluminum or other materials, such as bakelite.

A spoil board may be placed on the work table 12, configured to allow vacuum suction via vacuum means (not shown in Figure 1), in order to hold the panel P in position. In this case, the spoil board is considered part of the work table 12.

The work centre further comprises a bridge 13, mobile along the work table 12 and configured to extend above the work table 12 on which the panel P to be machined may be placed.

The bridge 13 may include a crossbeam 131 and guide means 132 for moving a machining unit 15 of the work centre 1 along a direction transverse to the development direction of the base frame 11. The machining unit 15 comprises at least one machining tool for cutting the pieces Ri of the panel P according to the cutting sequence.

The work centre 1 may also comprise a protective enclosure 14, arranged around the bridge 13 to prevent chips or machining debris generated by the highspeed rotation of the machining tools from striking the operator. The protective enclosure 14 may also include a window 141 for visual inspection of the machining process.

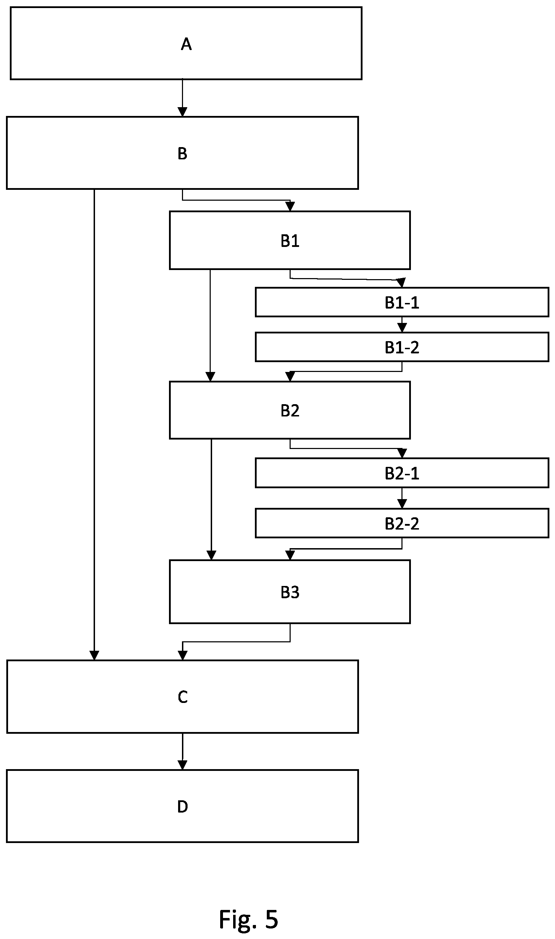

Once the panel P to be machined is positioned on the work table 12, or on the spoil board (not shown in the figure), the movement of the bridge 13 and the machining unit 15 along the X and Y axes enables, for example, a router (not shown in the figures) installed on the machining unit 15 to perform the cutting of parts from the panel P, according to a cutting path calculated by a control logic unit 16, which also runs a computer program implementing a method for improved panel cutting, as further described with reference to Figure 5.

The control logic unit 16 may comprise a processor, such as one or more processors configured to execute a computer program, including, by way of example, microprocessors or other types of processing devices. In general, the processor may receive/obtain instructions and data from a computer-readable storage medium, such as read-only memory (ROM), random-access memory (RAM), external memory, or any combination thereof, and execute the instructions to perform the method described below with reference to Figure 5.

The instructions may be part of a computer program or software that may be stored on a computer-readable medium, such as a storage device or internal/external memory of the control logic unit 16, for example, the memory of a remote server.

The control logic unit 16 may be either integrated within the work centre 1 or be external to it.

The work centre 1 may also comprise vacuum means 17 for holding the panel P in position on the work table 12.

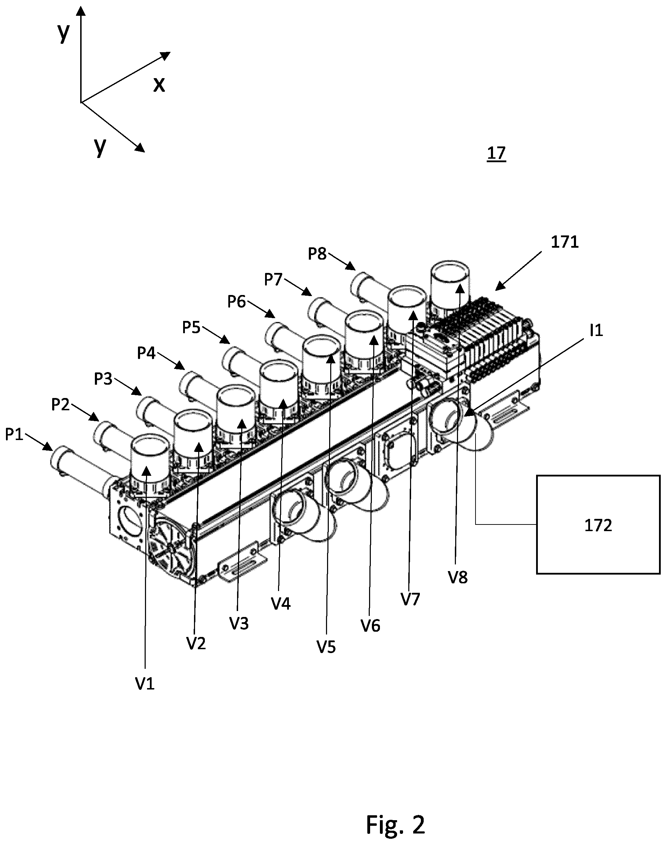

With reference to Figure 2, the vacuum means 17 may comprise at least one vacuum pump 172 and a vacuum distributor 171 fluidically coupled to the pump 172, for example via a corresponding inlet I1.

The vacuum distributor 171 provides static vacuum management and may comprise a main body including a set of fluid channels and fluid ports P1-P8, each associated with a respective plurality of sectors of the work table 12.

The fluid channels are fluidically coupled to the fluid ports P1-P8 to distribute vacuum to the respective sectors of the work table 12.

The vacuum distributor 171 further comprises control valves V1-V8 for regulating the vacuum distribution to the corresponding ports P1-P8, such as for example manually or automatically actuated valves, configured to open and close in response to a control signal, for example, a signal generated by the control logic unit 16 to close one or more suction valves and concentrate vacuum at the remaining fluid ports.

Although not shown in Figure 1, the work centre 1 may also comprise signalling means of acoustic, visual (e.g. LED), and/or tactile type, configured to communicate a notification signal indicating that one or more of the plurality of sectors are in a non-vacuum condition.

The vacuum means 17 may be part of the work centre 1 or be external to it.

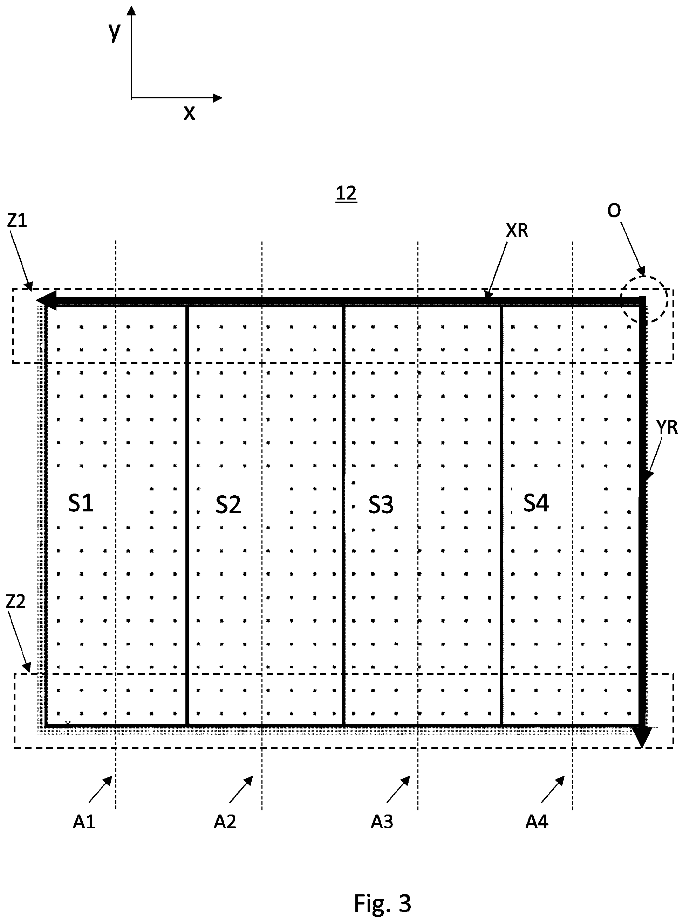

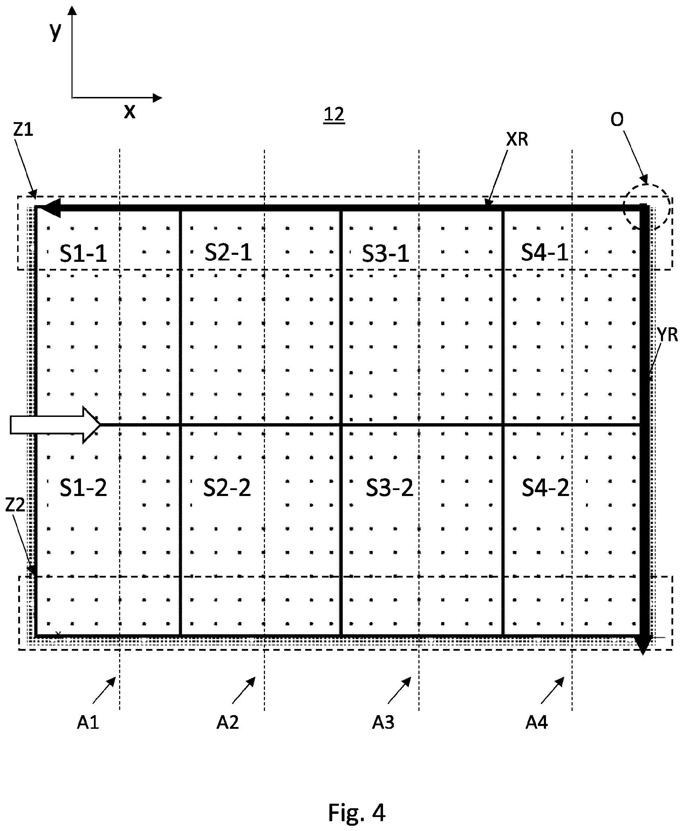

With reference to Figures 3 and 4, the work table 12 is divided into a plurality of sectors S1-S4. In particular, the work table 12 shown in Figure 3 comprises sectors S1, S2, S3, and S4, whereas the work table 12 shown in Figure 4 comprises sectors S1-1, S1-2, S2-1, S2-2, S3-1, S3-2, S4-1, and S4-2.

Although the various sectors shown in Figures 3 and 4 have a rectangular shape, it is clearly understood that the sectors are not limited to the specific shape illustrated. For example, one or more sectors may have arbitrary shapes and/or may be non-adjacent to the remaining sectors and spaced apart from one another.

In general, each of the sectors S1-S4 extends along a respective development axis A1-A4, parallel to the development axes of the other sectors.
Thus, in the example illustrated in Figure 3, sector S1 extends along development axis A1, sector S2 extends along development axis A2, sector S3 extends along development axis A3, and sector S4 extends along development axis A4.

In the example illustrated in Figure 4, sectors S1-1 and S1-2 extend along the same development axis A1, sectors S2-1 and S2-2 extend along the same development axis A2, sectors S3-1 and S3-2 extend along the same development axis A3, and sectors S4-1 and S4-2 extend along the same development axis A4.

Accordingly, Figure 4 comprises, for each development axis A1-A4, a plurality of sectors arranged along the same development axis.

Although the examples shown in Figures 3 and 4 illustrate specific ways of subdividing the work table 12, it is well evident that the work table 12 may be divided into a different number of sectors and may include more or fewer development axes corresponding to the respective sectors. In general, for each development axis A1-A4, the work table 12 may be subdivided into one or more sectors S1-1, S1-2 arranged along the same development axis A1-A4.

Each of the sectors S1-S4 may be placed either in a vacuum condition or in a non-vacuum condition. To that end, the plurality of sectors S1-S4 may be fluidically coupled to the plurality of fluid ports P1-P8, so that the vacuum condition can be controlled by actuating the respective control valves V1-V8.

For example, in Figure 3, sector S1 may be fluidically coupled to fluid port P1, sector S2 may be fluidically coupled to fluid port P2, sector S3 may be fluidically coupled to fluid port P3, and sector S4 may be fluidically coupled to fluid port P4. The remaining ports P5-P8 may be deactivated, thereby concentrating vacuum on ports P1-P4.

In another example shown in Figure 4, sector S1-1 may be fluidically coupled to fluid port P1, sector S1-2 may be fluidically coupled to fluid port P2, sector S2-1 may be fluidically coupled to fluid port P3, sector S2-2 may be fluidically coupled to fluid port P4, sector S3-1 may be fluidically coupled to fluid port P5, sector S3-2 may be fluidically coupled to fluid port P6, sector S4-1 may be fluidically coupled to fluid port P7, and sector S4-2 may be fluidically coupled to fluid port P8.

With reference now to Figure 5, a block diagram is shown illustrating a computer-implemented method at a work centre 1 for cutting a panel P into a plurality of pieces Ri.

The method enables the determination of an optimized cutting sequence that maximizes the holding of the pieces Ri, by sequencing the cutting operations according to a column-based strategy.

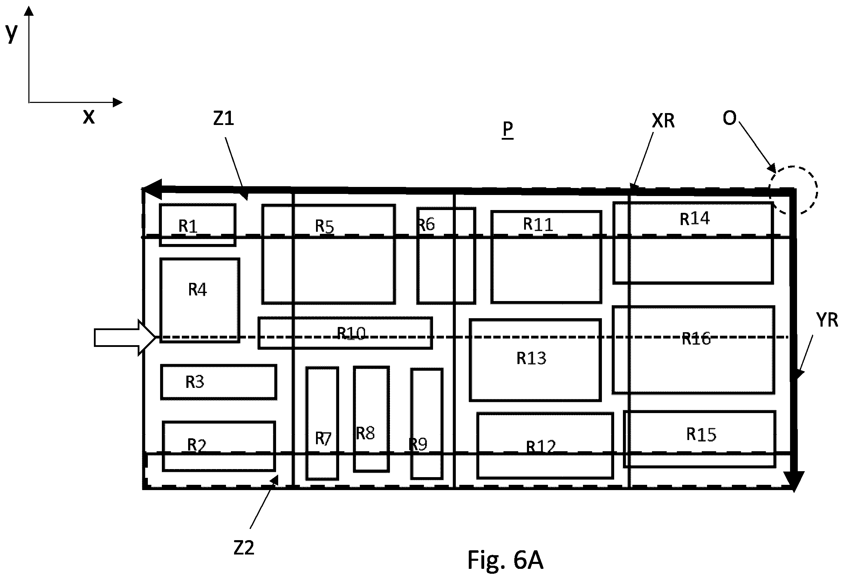

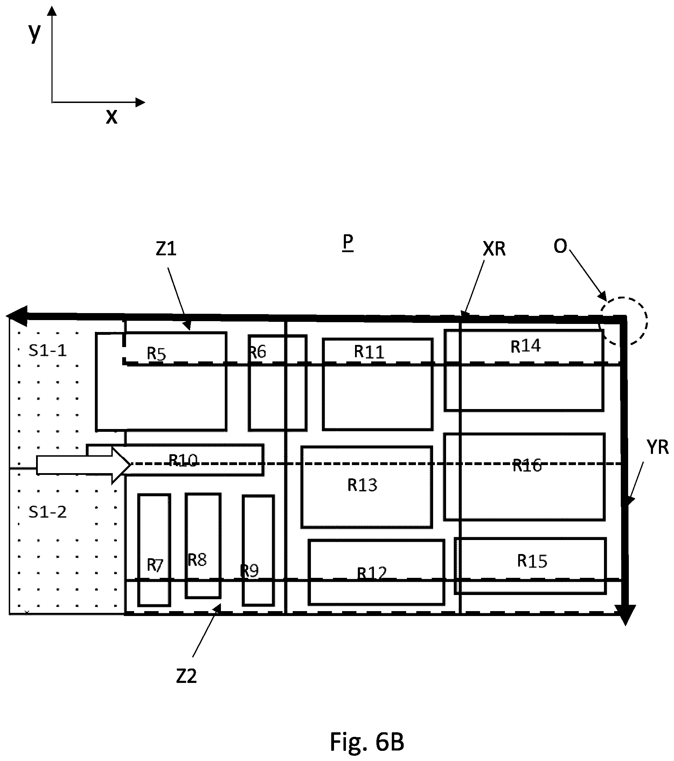

Figures 6A and 6B illustrate a simple example of a cutting sequence for the pieces Ri, obtained based on the cutting algorithm, to arrive to the final piece, in order to convey the general logic of the procedure. In other words, the cutting sequence follows the progressive numbering of the pieces Ri, namely R1, R2, R3, ..., R16.

As shown in Figure 6A, the panel P is subdivided into a plurality of pieces Ri, having different, possibly irregular, shapes. In the example illustrated, the panel P is ideally divided into columns whose dimensions correspond to those of the respective sectors S1-S4 on which the panel P is placed.

The panel P is positioned, for example by an operator, on the work table 12 with reference to a first axis XR of the work table 12 and a second axis YR of the work table 12. These axes XR and YR, also referred to as reference axes, intersect at a corner called the nesting corner O, which corresponds to a predetermined reference point for aligning the panel P to be machined.

In Figure 6A, the machining of panel P proceeds in a direction perpendicular to axis YR, and therefore towards axis YR, so that the reference axis is the second axis YR, and each of the respective development axes A1-A4 is parallel to the reference axis.

The machining direction may go from left to right, as shown in Figure 6A, or vice versa if the axes YR and XR are mirrored relative to those shown in the figure.

In the example illustrated in Figure 6A, the panel P extends across the entire work table 12, covering all eight sectors S1-S4. It is understood, however, that the panel P may have different dimensions and may only partially cover some of the eight sectors S1-S4, either entirely or in part.

In general, the overall area of the panel P to be machined corresponds to the underlying sectors S1-S4 on which the panel P is placed.

When the panel P is placed on the work table 12, each of the sectors S1-S4 on which a respective portion of the panel P is positioned may be placed in a vacuum condition to hold in position at least that respective portion of the panel P.

Using the above-mentioned reference system, the control logic unit 16, along with data relating to the dimensions of the panel P and the work table 12, can select each of the sectors S1-S4 to be placed in a vacuum condition, so as to retain in position at least the corresponding portion of the panel P.

With reference to Figure 5, the method may include a procedure for automatically defining a starting point.

To this end, the method may comprise step A, in which one or more starting sectors on which the panel P is arranged for performing the cutting sequence are determined.

**In** particular, step A includes selecting the one or more starting sectors having a greater distance from the reference axis, which in the case of Figures 6A and 6B corresponds to axis YR.

**In** other words, in step A, the method selects as starting sectors the column of sectors located farthest to the left (or right, depending on the processing direction) relative to the reference axis, that is the one or more sectors arranged on the side opposite the nesting corner O. In this way, a unidirectional cutting sequence of the panel P can be obtained. For example, if the nesting corner O originates on the left (top or bottom), the cutting sequence begins on the right and proceeds to the left, and vice versa.

With reference to Figure 6A, the starting sectors are S1-1 and S1-2, since the distance of development axis A1 from the reference axis is greater than that of axis A2 from the reference axis. Whereas, in Figure 6B, the starting sectors are S2-1 and S2-2, as the distance of axis A2 from the reference axis is greater than distance of axis A3 from the reference axis.

Step A may therefore include, for example, comparing the distance of each sector S1-S4 from the reference axis.

Thus, it is possible to proceed with the first cutting operations in proximity of the outermost sections of the work table 12 relative to the reference axis, progressively advancing toward the reference axis.

With continued reference to Figure 5, the method comprises step B, in which the cutting sequence is performed for each piece, of the plurality of pieces Ri, arranged at least partially on one or more sectors S1-1, S1-2 (or a column of sectors) of the plurality of sectors S1-S4.

During step B, the sectors S1-1 and S1-2 are placed in a vacuum condition to hold in position at least a respective portion of the panel P arranged over the one or more sectors S1-1, S1-2.

For example, with reference to Figure 6A, in the initial step B, cutting is performed on the portion of panel P arranged over sectors S1-1 and S1-2, thus pieces R1-R4 are cut.

In certain cases, to determine whether a piece Ri can be considered as associated with the one or more sectors (or column of sectors), the method may use a threshold-based approach on the overlying area of the piece Ri positioned at least in part over the respective sectors. In that case, the method can proceed by calculating the area of the piece Ri overlying the respective sensor and comparing it to the whole area of the piece Ri. If the ratio reaches a predefined threshold value, the piece Ri is considered associated with those sectors.

For example, in Figure 6B, pieces R5 and R10 are considered associated with sectors S2-1 and S2-2, but not with sectors S1-1 and S1-2.

The method further comprises step C, in which, in response to an indication that step B has been completed, the one or more sectors S1-1, S1-2 are placed in a non-vacuum condition, as these sectors will no longer be involved in machining operations.

Step C may include a first sub-step, in which, for each of the one or more sectors, a control signal is generated to close a corresponding suction valve V1, V2, interrupting suction in sectors S1-1 and S1-2; and a second sub-step, in which the control signal is transmitted, for example via the control logic unit 16, to the respective suction valve V1, V2, thereby causing it to close.

Figure 6B shows a top view of panel P at the completion of the cutting sequence for sectors S1-1 and S1-2, which are placed in a non-vacuum condition, resulting in the vacuum generated by the vacuum means 17 will be concentrated on the remaining sectors S2-S4, which are still in a vacuum condition. This solution allows maximizing vacuum retention in the context of static vacuum management, without the need for additional pumps, particularly for cutting small parts.

The next step D of the method provides for repeating steps B and C for one or more additional sectors S2-1, S2-2 of the plurality of sectors S1-S4, which are arranged along an additional development axis A2, parallel to the development axis A1.

For example, with reference to Figure 6B, in the subsequent step B, the cutting is carried out on the portion of panel P arranged over sectors S2-1 and S2-2, resulting in pieces R5-R10 being cut.

Upon completion of this step, the one or more additional sectors S2-1 and S2-2 may be placed in a non-vacuum condition, and the method proceeds with the cutting of the portion of panel P arranged on sectors S3-1 and S3-2 along development axis A3.

Finally, the algorithm proceeds with cutting the portion of panel P arranged on the last pair of sectors S4-1 and S4-2, until the cutting operation of the panel is completed. Pieces R1-R16 are thus cut according to the sequence shown in Figure 6A, progressively placing, upon completion of step B, the one or more sectors sharing the same development axis in a non-vacuum condition, thereby concentrating vacuum on the remaining sectors as the machining of the panel P progresses.

The method may further include a step of issuing a notification signal, for example via acoustic, visual (e.g., LED), and/or tactile signalling means, in response to a determination that the one or more sectors arranged along the same development axis are in a non-vacuum condition.

At this point, the operator may proceed with the removal of the cut pieces while the cutting operation continues on the remaining sectors, thus eliminating the need to wait for the entire cutting operation on the panel P to be completed.

For example, the operator may proceed with the removal of pieces R1-R4 once sectors S1-1 and S1-2 have been placed in a non-vacuum condition, and may subsequently proceed with the removal of pieces R5-R10 once sectors S2-1 and S2-2 are also in a non-vacuum condition.

To improve operator safety, step C may comprise a sub-step in which the movement of the mobile bridge 13 of the work centre 1 is inhibited over the one or more sectors that have been placed in a non-vacuum condition.

With continued reference to Figure 1, a spoil board may be arranged on the work table 12 to allow vacuum suction through vacuum means (not shown in Figure 1), for holding the panel P in position.

The spoil board is typically a breathable MDF ("Medium-Density Fibreboard") panel having a plurality of small holes.

A vacuum condition can be created beneath the spoil board, for the plurality of sectors S1-S4, to hold the panel P in position during machining.

The spoil board may be scored, shaped, or unintentionally modified during the machining phases of the pieces Ri, and typically has a thickness between 5 mm and 20 mm.

In any case, air transpiration along the side edges of the spoil board near the upper and lower hatched regions in Figures 3 and 4 define the respective lower grip areas Z1 and Z2, that is areas having a vacuum factor below a predefined vacuum threshold.

Accordingly, the work table 12 may comprise a first lower grip area Z1 and a second lower grip area Z2.

With reference to Figure 5, the cutting method according to the present invention also allows for maximizing the holding of the pieces even in the presence of areas having a vacuum factor below a predefined threshold.

To this end, step B of the cutting method may include the following sub-steps:
B1) determining at least one lower grip area Z1 for one or more sectors S1-1, S1-2;
B2) performing the cutting sequence for each piece Ri arranged over the one or more sectors S1-1, S1-2, and at least partially over lower grip area Z1; and
B3) in response to an indication that step B2 has been completed, performing the cutting sequence for each remaining piece Ri being arranged over the one or more sectors S1-1, S1-2.

Step B1 of the method may comprise the following sub-steps:
B1-1) determining a first lower grip area Z1 for the first sector S1-1; and
B1-2) determining a second lower grip area Z2 for the second sector S1-2.

Step B2 of the method may comprise the following sub-steps:
B2-1) performing the cutting sequence for each piece Ri arranged at least partially over the first lower grip area Z1 of the first sector S1-1; and
B2-2) in response to an indication that step B2-1 has been completed, performing the cutting sequence for each piece Ri arranged at least partially over the second lower grip area Z2 of the second sector S1-2.

In other words, a single column of sectors presents two lower grip areas Z1 and Z2, respectively located at the top and bottom (as shown in Figures 6A and 6B), and an intermediate higher grip area, that is an area having a vacuum factor above a predefined vacuum threshold.

Thus, during step B, the method may perform the cutting operations by first cutting within the first lower grip area Z1 from top to bottom (e.g., cutting piece R1), then moving to the opposite end of the sector column to cut in an opposite direction, that is from the bottom-to-top direction, over the second lower grip area Z2 in the (e.g., cutting piece R2), and finally completing the column (e.g., cutting remaining pieces R3 and R4).

This enables cutting first the lower grip areas Z1 and Z2 and then advance inward toward regions of greater holding strength within the panel P.

Once a column of sectors is completed, the method proceeds with the adjacent column, and so on until all columns are completed.

It is understood that, in the case of a panel P with dimensions different from the work table 12, the panel P might cover only one of the lower grip areas (e.g., Z1 or Z2), or in some cases may be entirely arranged within a higher grip area, without covering any lower grip area.

When a piece spans on both a lower grip area Z1, Z2 and a higher grip area, the method may proceed by calculating the area of the piece underlying each respective area and comparing it to the total area of the piece. Thus, if the ratio reaches a predefined threshold, the piece is considered to be associated with that area.

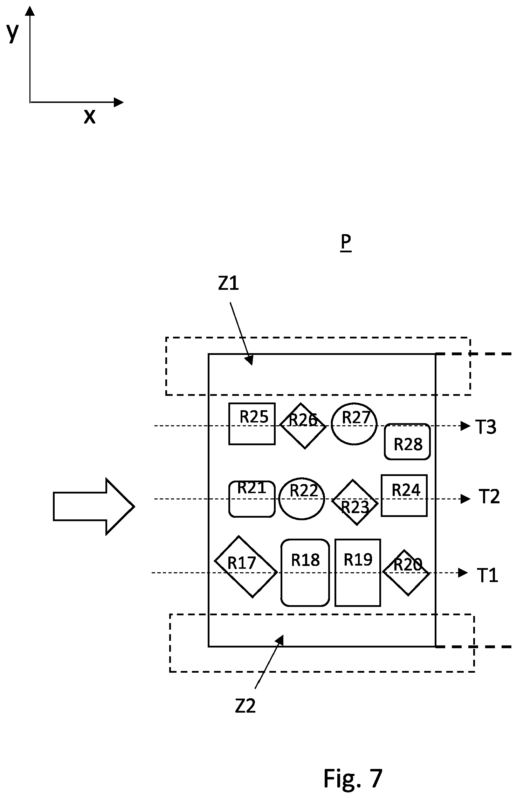

With reference to Figure 7, once all the pieces to be sequenced relative to a respective area, such as the higher grip area, have been identified, the method may proceed by identifying one or more bands of the panel P extending within that area, along one or more cutting paths T1-T3, which are parallel to the general cutting direction.

At this stage, the pieces Ri located in the respective bands may be cut in the direction indicated by the paths T1-T3, from bottom to top, thus avoiding the premature removal of a piece that acts as a "plug" for the remaining pieces, which might otherwise weaken the retention of a subsequent piece in the sequence. For example, piece R20 acts as a plug for pieces R17-R19, and piece R28 acts as a plug for pieces R17-R27.

Cutting may then proceed until the entire sector column is completed. In other words, the cutting sequence follows the progressive numbering of the pieces Ri, namely R17, R18, ..., R28.

Also in this case, in order to determine whether a piece may be considered part of a band, the method may employ a threshold-based area approach on the area of the respective band occupied by the piece Ri. In that case the method may proceed by calculating the area of the respective band occupied by the piece Ri and comparing it to the whole area of the piece. If the ratio reaches a predefined threshold, the piece is considered to belong to that band.

The sequencing of the column aims to define a cutting sequence for the pieces Ri that ensures maximum panel compactness and avoids the "Swiss cheese effect", that is the formation of gaps in the panel P that would reduce its holding capability.

### Advantages

One advantage of the cutting method according to the present invention is that it allows for maximizing the holding of the pieces, even in the presence of static vacuum management, thereby achieving more precise sequential cuts.

A second advantage of the cutting method of the present invention is that it allows for progressively concentrating vacuum in the remaining sectors as the machining of the panel proceeds.

A further advantage of the present invention is that the cutting method can be easily implemented by a processor.

Another advantage of the present invention is that it enables the progressive removal of cut pieces during the cutting phase, thereby enhancing operator safety.

The present invention has been described by way of illustrative but nonlimiting preferred embodiments, however it is to be understood that variations and/or modifications may be made by those skilled in the art without departing from the scope of protection as defined by the appended claims.

## Claims

1. Computer-implemented method at a work centre (1) for cutting a panel (P) into a plurality of pieces (Ri), said panel (P) being referenced on a work table (12) of the work centre (1) relative to a first axis (XR) of said work table (12) and a second axis (YR) of said work table (12); said work table (12) being divided into a plurality of sectors (S1-S4), each of said plurality of sectors extending along a respective development axis (A1-A4) parallel to the remaining development axes of said remaining sectors and parallel to a reference axis of said first axis (XR) and said second axis (YR);
said method comprising the following steps:
B) performing a cutting sequence for each piece, of said plurality of pieces (Ri), being arranged at least partially on one or more sectors (S1-1, S1-2) of said plurality of sectors (S1-S4), said one or more sectors (S1-1, S1-2) being arranged along the same development axis (A1) and in a vacuum condition to hold in position at least a respective portion of said panel (P) arranged on said one or more sectors (S1-1, S1-2);
C) in response to an indication that said step B has been completed, placing said one or more sectors (S1-1, S1-2) in a non-vacuum condition; and
D) performing steps B and C, for one or more additional sectors (S2-1, S2-2) of said plurality of sectors being arranged along an additional development axis (A2) parallel to said development axis (A1).

2. Method according to the preceding claim, wherein said step C comprises issuing a notification signal in response to a determination that said one or more sectors (S1-1, S1-2) are in a non-vacuum condition.

3. Method according to claim 1 or 2, wherein said step C comprises inhibiting the movement of a mobile bridge (13) of said work centre (1) over said one or more sectors (S1-1, S1-2).

4. Method according to any of the preceding claims, comprising the following step:
A. determining one or more starting sectors on which said panel (P) is disposed for performing said cutting sequence, said one or more starting sectors having a greater distance from said reference axis; and
executing step B of the method for said one or more starting sectors.

5. Method according to the preceding claim, comprising comparing the distance of each sector (S1-S4) from said reference axis.

6. Method according to any of the preceding claims, wherein the distance of said additional development axis (A2) from said reference axis is less than the distance of said development axis (A1) from said reference axis.

7. Method according to any of the preceding claims, wherein said step B comprises the following sub-steps:
B1) determining at least one lower grip area (Z1) for said one or more sectors (S1-1, S1-2), said at least one lower grip area (Z1) having a vacuum factor below a predefined vacuum threshold;
B2) performing the cutting sequence for each piece (Ri) being arranged on said one or more sectors (S1-1, S1-2) and at least partially on said at least one lower grip area (Z1); and
B3) in response to an indication that said step B2 has been completed, performing the cutting sequence for each remaining piece (Ri) being arranged on said one or more sectors (S1-1, S1-2).

8. Method according to any of the preceding claims, wherein said one or more sectors comprise a first sector (S1-1) and a second sector (S1-2), and wherein said step B1 comprises:
B1-1) determining a first lower grip area (Z1) for said first sector (S1-1), and
B1-2) determining a second lower grip area (Z2) for said second sector (S1-2); and
wherein said step B2 comprises:
B2-1) performing the cutting sequence for each piece (Ri) being arranged at least partially on said first lower grip area (Z1) of said first sector (S1-1); and
B2-2) in response to an indication that said step B2-1 has been completed, performing the cutting sequence for each piece (Ri) being arranged at least partially on said second lower grip area (Z2) of said second sector (S1-2).

9. Method according to any of the preceding claims, wherein said work centre (1) comprises vacuum means (17) for holding said panel (P) in position on said table and wherein placing said one or more sectors (S1-1, S1-2) in a non-vacuum condition comprises, for each of said one or more sectors (S1-1, S1-2), the following sub-steps:
generating a control signal to close a respective suction valve (V1, V2) interrupting the suction in said sector (S1-1, S1-2); and
transmitting said control signal to said respective suction valve (V1, V2).

10. Work centre (1) comprising:
a work table (12), for supporting a panel (P) to be cut into a plurality of pieces (Ri) according to a cutting sequence, said work table (12) being divided into a plurality of sectors (S1-S4), each of said plurality of sectors (S1-S4) extending along a respective development axis (A1-A4) parallel to the remaining development axes of said remaining sectors;
vacuum means (17) for holding said panel (P) in position on said work table (12);
a bridge (13), mobile along said work table (12);
a machining unit (15), arranged mobile on said bridge (13), having at least one machining tool, for cutting said pieces (Ri) of said panel (P) according to said cutting sequence, and
a control logic unit (16), configured to move said bridge (13) and said machining unit (15) to perform said cutting sequence with said machining tool, said control logic unit (16) being configured to move said bridge (13) and said machining unit (15) according to the cutting method of any of claims 1-9.

11. Work centre (1) according to the preceding claim, comprising acoustic, visual, and/or tactile signalling means for communicating said notification signal indicating that one or more sectors (S1-1, S1-2) of said plurality of sectors (S1-S4) are in a non-vacuum condition.

12. Computer product comprising instructions which, when the program is executed by a processor, cause the processor to perform the steps of the method according to any of claims 1-9.

13. Computer-readable storage medium comprising instructions which, when executed by a processor, cause the processor to perform the steps of the method according to any of claims 1-9.
